# EUROPEAN PATENT SPECIFICATION

(11) **EP 3 488 690 B1**
(45) Date of publication and mention of the grant of the patent: **08.01.2025**
(21) Application number: 18205703.4
(22) Date of filing: 12.11.2018
(51) Int. Cl.: A01K 1/01

(54) **AUTONOMOUS CLEANING VEHICLE AND ANIMAL SHED PROVIDED THEREWITH**
AUTONOMES REINIGUNGSFAHRZEUG UND DAMIT AUSGESTATTETER STALL
VEHICULE DE NETTOYAGE AUTONOME ET ETABLE POUR ANIMAUX MUNIE D'UN TEL VEHICULE

(30) Priority: 23.11.2017 NL 2019960
(43) Date of publication of application: 29.05.2019
(73) Proprietor: Lely Patent N.V., 3147 PB Maassluis (NL)
(72) Inventor: MOSTERT, Gerard, 3147 PB Maassluis (NL)
(74) Representative: Octrooibureau Van der Lely N.V.

(56) References cited:
- WO-A1-2013/010785
- WO-A1-2015/170967
- NL-C2- 1 010 771
- US-A- 4 011 618
- US-A1- 2015 201 583

## Description

The present invention relates to an autonomous shed-cleaning vehicle for removing manure from a shed floor in an animal shed for livestock animals, in particular dairy animals, and comprising a manure slide for moving manure over the shed floor.

Such a shed-cleaning vehicle is known per se, such as a manure slidethat is advanced along a chain or a Lely Discovery^{®}.

There is also known a shed-cleaning scraper according to the preamble of claim 1, as disclosed in document US4,011,618.

A drawback of the known shed-cleaning vehicles is that they may form a danger to the animals in the animal shed, because the vehicle may, for example, drive up against the livestock animal, in particular against a leg. Although this is prevented in the prior art by making the vehicle, for example, drive around the animal or making it wait, this makes the control unit needlessly complicated, requires sensors and may also make control of the vehicle less flexible.

Another drawback is the fact that the livestock animals may come into contact with the manure which has been gathered by the manure slide in an adverse way. After all, the slide will be able to push a relatively large amount of manure in front of it, so that the legs, and in particular the claws, of the livestock animals may end up relatively deep in the manure, whereas it is usually one of the objectives of a manure slide to keep the claws relatively clean.

It is an object of the present invention to solve said drawbacks, at least partly, and to this end provides an autonomous shed-cleaning vehicle according to Claim 1.

The shed-cleaning vehicle according to the present invention provides the livestock animals with the possibility of stepping onto the plateau, that is to say onto the vehicle, when the vehicle with a pool of manure moves in their direction, and of stepping off the plateau again at any desired moment, but often immediately afterwards. As a result thereof, the vehicle can continue without stopping and without causing injury to the animals. Furthermore, the livestock animals are thus given the option of stepping over the pool of manure via the plateau. It should be noted here that the plateau reaches beyond the manure slide and may, as it were, form a small canopy over it. In this way, the vehicle does not push the pool of manure against the legs or over the claws of the livestock animals.

It should be noted that the predetermined step height is a height which can readily be covered by the average animal of the respective species of livestock animal. Obviously, this height depends on the species and, optionally, also on the age. Ideally, the step height is tailored to the group of livestock animals in the animal shed, but it will usually be possible to choose a safe step height. Furthermore, here, the expression "the plateau (...) is configured to be walked on by one or more of the livestock animals" is understood to mean that the plateau is able to support the weight of one or more livestock animals. In this case, the dimensions of the plateau determine the maximum number of livestock animals for which there is space on the plateau. However, in practice, this will virtually always be limited to 1, although this does not have to be the case. The vehicle is additionally configured in such a way that the vehicle may also continue to drive in case there are one or more livestock animals on the plateau. Obviously, in this case, the construction of the plateau, the frame and the drive means has to be adapted to the maximum weight of the animals to be expected. It is also possible, but not according to the invention, for the vehicle to be able to support the weight, but then, for example, rests on the floor and stops moving.

Specific embodiments and further advantages will be described below. In particular, the central section is higher than at least one, and in particular each, treadboard section. Thus, it is possible to provide more volume under the central section without making it more difficult to get on. This larger volume then has more space for the motors, for batteries, the control unit, etc. In other words, one or more treadboard sections may be at a lower level than the central section in order to facilitate getting on.

In useful embodiments, the treadboard sections are situated on opposite sides, and, in particular, one treadboard section is situated on a front side of the vehicle, viewed in the intended direction of travel. Such a positioning makes it possible for the animals to walk straight across the vehicle. However, a bend is not excluded. In a useful way, a treadboard section will be situated at the front side of the vehicle, viewed in the intended direction of travel, so that a livestock animal which is approached by the vehicle can simply step onto the vehicle, onto the plateau.

In embodiments, the treadboard sections are situated entirely around the central plateau section OR animal-guiding means are situated on either side of the central plateau section which extend from a first one of the treadboard sections to a second one of the treadboard sections. In the former embodiment, a livestock animal can readily step onto the vehicle and does not run the risk of having to step down from an excessive height. However, it is also possible to provide treadboard parts, for example, only at the front and rear side, or in two other directions, in which case the animal-guiding means are provided, as described, between the treadboard parts, in order to prevent the livestock animal from stepping off the plateau at a spot between the treadboard sections. The animal-guiding means comprise, for example, fences, ropes, elevated portions, etcetera.

In embodiments, the treadboard section on the front side extends beyond a front section of manure slide. Thus, even with a large manure slide and a consequently large pool of manure in front of the slide, the livestock animal will not have to stand in this pool, but can simply stand on the plateau via the treadboard section. Conversely, the slide can then have a shape and/or size which is such that it can carry along a (very) large amount of manure in one movement without inundating the livestock animals with this pool of manure.

In embodiments, at least one, and in particular each, treadboard section on the outer edge extends substantially to floor level. Thus, it is possible for the livestock animals to walk onto and across the vehicle from, in principle, any position, so that their freedom of movement is limited as little as possible and, conversely, the vehicle has to take the livestock animals into account to the smallest possible degree. It should be noted that the treadboard sections do not have to extend entirely down to floor level on all sides, because this would result in loss of the manure slide function. At least the treadboard section on the front side will have to be at a predetermined distance over the shed floor and/or have an opening which is sufficiently wide and high to allow the manure through to the manure slide. In practice, all this will depend on the manure, such as the consistency and amount.

In specific embodiments, the step height is adjustable. Additionally or alternatively, a width of the shed-cleaning vehicle, in particular of the manure slide and of the plateau, more particularly of the manure slide and at least one treadboard section and/or the central part, is adjustable. Thus, the vehicle can be rendered suitable for different animal species, ages, or in general different step heights and for walkways of different widths. Adjustment may be effected by means of an adjustment means which is controllable by the control unit, such as a cylinder or toothed belt.

In embodiments, the drive means comprise two or more drivable wheels or an external pulling device or a motor with an engagement means for engaging with an external fixedly arranged construction, such as a toothing or chain. By means of the two or more drivable wheels, the vehicle can not only be propelled by the control unit, but can also be controlled, although a control unit is not always necessary. It should furthermore be noted that it may suffice to have 2 wheels if the manure slide serves as the third point of support. Nevertheless, additional, optionally controllable wheels may be provided, such as swivel wheels. Alternatively or additionally, a fixedly arranged construction may be provided with respect to which the vehicle is able to move forward, such as a chain or toothing, e.g. a cogwheel track.

In specific embodiments, the vehicle furthermore comprises a manure suction means for sucking up manure gathered by the manure slide and a manure storage container which is connected thereto for collecting and temporarily storing the sucked-up manure. The manure storage container is then situated under the plateau, in particular under the central section thereof. The risk of the pool of manure which is being pushed along coming up against the legs of the livestock animals is then reduced even further, because the dimensions of the pool can remain limited. Furthermore, it is thus possible for a vehicle which, due to the manure storage container, could in principle be voluminous to effectively take up relatively little space in the animal shed, because the animals will not walk around it, but over it.

In significant embodiments, the central section comprises an animal treatment device for treating a claw or leg of the animal. Because the animal will move across the vehicle in a relatively controlled manner, this displacement may be combined with a treatment of a leg and then in particular of a claw. Because the vehicle moves through the animal shed by itself, it is thus in principle possible to reach more animals, at least more often or more quickly.

In useful embodiments, the animal treatment device comprises a leg bath which is configured to contain, and in particular is provided with, a disinfectant for the claws of the livestock animal. Alternatively or additionally, in embodiments, the animal treatment device comprises a spray nozzle for spraying a cleaning agent or disinfectant onto a leg or claw of the livestock animal. Actually, the synergetic combination of a manure slide with a leg bath or spray nozzle for treating claws is expedient in order to ensure that the claws of as many of the livestock animals as possible are in as good a condition as possible. Obviously, the vehicle then furthermore comprises a storage container with cleaning agent or disinfectant. Furthermore, it should be noted here that any cleaning agent or disinfectant which runs off the vehicle is spread in the animal shed and will thus end up on the floor, which will have a further disinfecting effect. In this case, the majority of the agent will end up on a shed floor which has been swept by the manure slide, which is considered to be even better.

The invention also relates to an animal shed for livestock animals, in particular dairy animals, and comprising an autonomous shed-cleaning vehicle according to the invention and a floor having a walkway for the livestock animals. It will be clear that in such an animal shed, the floor is kept clean whereas the livestock animals are disturbed as little as possible and the shed-cleaning vehicle may be controlled as easily as possible. In particular, the shed-cleaning vehicle has a width which is substantially equal to the walkway, so that it can not only be easily cleaned in one attempt, but also because the vehicle then actually only has to move forward. With a chain- or cogwheel-driven vehicle, this will be clear, but for an autonomously displaceable vehicle, this makes the control unit much simpler. Obviously, other widths are not excluded, in particular larger widths than the width of the vehicle.

In specific embodiments of the animal shed, the floor is a closed floor, that is to say not a slatted floor, and furthermore a manure-collecting means comprising a collecting trough recessed into the ground and at least one opening arranged in the ground above the collecting trough are provided, wherein, in particular, all this is provided in the animal shed. Thus, a simple manure slide can scrape the manure together and subsequently push it to the manure-collecting means, where the manure is dumped in the collecting trough, through the opening(s). Alternatively or additionally, the shed-cleaning vehicle may comprise a manure suction means, as has already been described above. In that case as well, the vehicle can dump the (sucked-up) manure in the collecting trough via the opening(s), but the manure does not have to be pushed to this location over the ground, which is quicker and more hygienic.

The invention will be explained below in more detail by means of one or more exemplary embodiments and the drawing, in which:
Fig. 1 shows a highly diagrammatic view of an animal shed 1 according to the invention;
Fig. 2 shows a diagrammatic view in perspective of a vehicle 10' according to the invention;
Fig. 3 shows a diagrammatic cross-sectional view of a shed-cleaning vehicle 10" according to the invention; and
Fig. 4 shows a diagrammatic top view, in partial cross section, of an alternative shed-cleaning vehicle 10‴ according to the invention.

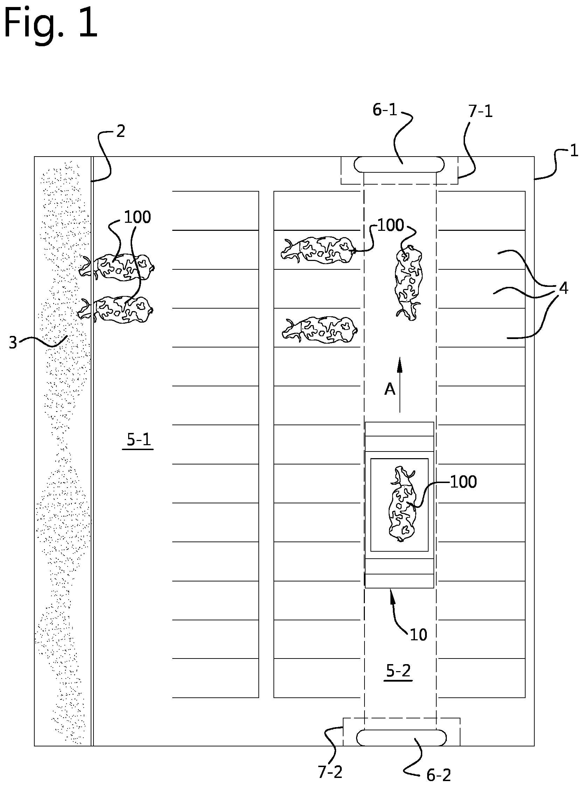

Fig. 1 shows a highly diagrammatic view of an animal shed 1 according to the invention for livestock animals, in this case cows 100. This animal shed 1 comprises a feed fence 2 behind which there is feed 3, and three rows of cubicles 4. Between all this, there are two walkways 5-1 and 5-2, in the latter of which a vehicle 10 is moving forwards in the direction of arrow A. At the ends of the walkway 5-2, there are dumping grids 6-1 and 6-2 aboveground and belowground, respectively, and manure-collecting troughs 7-1 and 7-2 which are therefore drawn in dashed lines. Details which are not relevant to the invention, such as for example water troughs, gates or a milking device, are not illustrated.

In the animal shed 1, cows 100 are in principle free to roam in walkways 5-1 and 5-2 and intermediate lanes connecting the former (not shown separately). In the right-hand section of the animal shed 1, there are cubicles 4 where the cows spend a large part of the day ruminating. Furthermore, reference numeral 2 denotes a feed fence via which fence the cows can reach feed 3 and which fence can be reached by the cows via the walkway 5-1.

In the course of the day, the cows will deposit manure in the walkways 5-1 and 5-2, which has to be cleared quickly in order to prevent problems with the claws or legs of the cows, and furthermore in order to prevent an excessive emission of harmful gases, such as ammonia. For the removal, a shed-cleaning vehicle 10 according to the invention is provided. This collects manure by pushing it, in the illustrated case in the direction of the arrow A. The vehicle 10, at least the manure slide thereof (which is not denoted separately here), is virtually as wide as the respective walkway 5-2. Thus, the vehicle 10 will be able to pick up all the manure on this walkway.

When it arrives at the end of the walkway, the vehicle 10 will push the manure until it is over the dumping grid 6-1. The manure will drop through the latter and into the manure-collecting trough 7-1 which is situated under the floor under the dumping grid 6-1. Subsequently, the vehicle 10 will move in the opposite direction and will start to push the manure which has been deposited in the meantime in the direction of the dumping grid 6-2 using the second manure slide (which has not been denoted separately here either) on the other side, in order to dump the manure in the collecting trough 7-2. Incidentally, it is not necessary for the vehicle 10 to have a second manure slide in order to be able to push manure backwards as well, but this is optional.

Fig. 1 furthermore shows that a dairy animal is situated on the vehicle 10. The vehicle 10 can be walked on, so that it does not impede the freedom of movement of the cows 100. All this will be explained in more detail below.

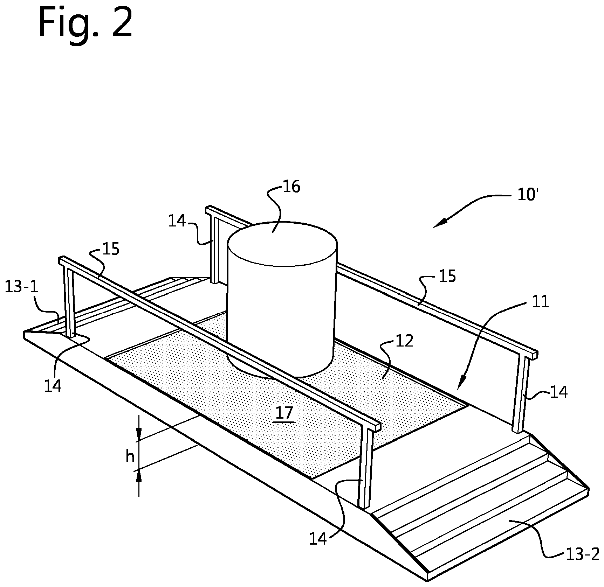

Fig. 2 shows a diagrammatic view in perspective of a vehicle 10' according to the invention.

The vehicle 10' comprises a plateau having a central plateau section 11 with, in this case, a tray 12 for liquid, and treadboard sections 13-1 and 13-2. Reference numeral 14 denotes posts and reference numeral 15 denotes girders which together form animal guides. Reference numeral 16 denotes a tank and reference numeral 17 a leg bath liquid. Furthermore, the vehicle 10' has an adjustable plateau height h.

Here, the shed-cleaning vehicle 10' is in principle suitable for displacement along a longitudinal axis which runs parallel to the girders 15. When the vehicle moves along a walkway and pushes the manure thereon forward, livestock animals which are situated on the walkway will be able to walk onto the vehicle, the central plateau section 11 thereof, via one of the treadboard sections 13-1 or 13-2. The illustrated treadboard sections are stepped and have a few steps. Alternatively, it is possible to configure the treadboard sections 13 as straight tracks. All this depends on the incline which is to be achieved and which should not be excessive in order to prevent slipping. The incline itself depends on the height h of the central plateau section 11 and on the length of the treadboard sections 13-1 or 13-2 in the longitudinal direction. In practice, suitable dimensions and inclines can easily be determined.

Along the central plateau section 11, optional animal guides are provided which in this case consist of posts 14 and girders 15. The girders may be beams, ropes, chains, partitions, etcetera, as long as they can serve to guide the animals across the platform section. On the one hand, this prevents the animals from being able to walk off or fall off the central plateau section 11, on the other hand, it will force the animals to walk through the tray 12 containing leg bath liquid 17. Thus, the vehicle 10' also serves as a movable leg bath. The liquid 17 comprises, for example, standard cleaning agent or disinfectant for the claws or legs of the livestock animals.

The tank 16 may contain, for example, fresh leg bath liquid which may be poured via a tap or valve (not shown) into the tray 12. Alternatively or additionally, the tank 16 may also contain manure which is removed from the pool of manure in front of the manure slide (not visible here) by pumping. For details regarding a possible embodiment of such a manure-sucking system, reference is made to the Netherlands patent publication NL2007115. Other embodiments are not excluded.

It should be noted here that the tank 16 in its entirety is optional and that it is also possible to provide a flat plateau section 11. Either the manure is pushed forward in its entirety as a pool of manure, or a slightly greater height h is opted for and the manure is stored in a low but wide tank.

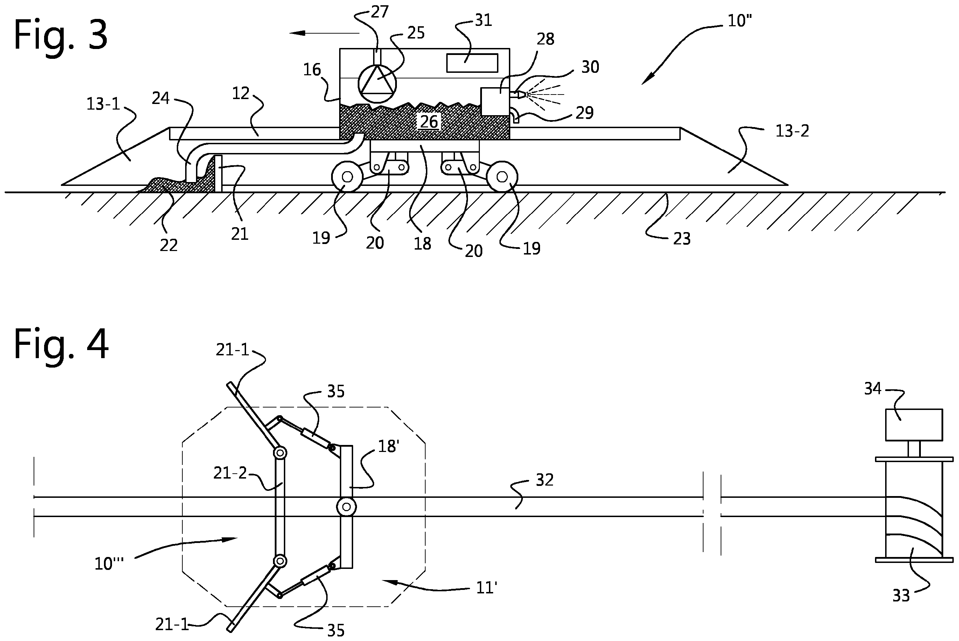

Fig. 3 shows a diagrammatic cross-sectional view of a shed-cleaning vehicle 10" according to the invention. Throughout the drawing, similar sections are denoted by identical reference numerals, optionally provided with one or more prime signs.

The vehicle 10" comprises a frame 18 with a height adjustment means 20 to which wheels 19 are attached. Reference numeral 21 denotes a manure slide which moves a pool of manure 22 across the shed floor 23. Via a line 24, the pump 25 pumps the pool of manure into the tank containing manure 26, with reference numeral 27 denoting venting means.

Reference numeral 28 denotes a storage container for leg bath liquid which can run into the tray 12 via a tap 29 or may be sprayed via a spray nozzle 30. Finally, reference numeral 31 denotes a control unit.

The vehicle 10" is in principle suitable for moving in the direction of the illustrated arrow and the control unit is preferably configured to move the vehicle autonomously. To this end, the control unit 31 may independently drive, for example, the wheels 19, by means of motors (not shown here). It is also possible for a steering wheel to be provided in a manner which is known per se. Other drive mechanisms, such as caterpillar tracks or the like, are also possible.

When moving, the manure slide will collect manure and other dirt present on the shed floor 23 and slide it forward in a pool of manure 22. When a sufficient amount of manure has been gathered in the pool of manure 22, the pump 25 may start to suck it off via the line 24, towards the tank 16, where manure 26 which has been removed by pumping will collect.

The run-on sections 13-2, but in particular 13-1, will have to be able to drive over the manure on the shed floor 23 and to this end their ground clearance will have to be sufficiently large. To this end, the control unit 31 may adjust the height of the frame 18 above the wheels 19 by means of the height adjustment means 20. It should be noted that the ground clearance preferably remains limited, at least to such a degree that the step height on the treadboard sections 13-1 and 13-2 remains comfortable for the animals in the animal shed. Incidentally, most manure is so thinly liquid that a ground clearance of a few centimetres will already suffice, which does not form a problem for the animals.

The storage container 28, incidentally not to scale, contains a supply of cleaning agent or liquid disinfectant. This liquid serves either to replenish the leg bath liquid in the tray 12 via the tap 29 or, alternatively or additionally, to be sprayed onto the claws of passing animals via an optional spray nozzle 30. Thus, a good claw health of the animals can be ensured even more securely.

Fig. 4 diagrammatically shows a top view, in partial cross section, of an alternative shed-cleaning vehicle 10‴ according to the invention. The vehicle comprises a frame 18' which is connected to a chain 32, which is wound onto and unwound from two drums 33 by means of motors 34 (in each case one is shown). The manure slide comprises a central manure slide section 21-2 and two manure slide side sections 21-1 which are adjustable by means of cylinders 35. In addition, a cover annex plateau 11' is illustrated by a dashed line.

The vehicle 10‴ is a very simple embodiment of a manure slide which can be moved to and fro by means of the chain 32, as a result of the fact that the motor 34 winds up the drum 33, or as a result of the fact that a second motor winds up a second drum at the other end of the chain 32 in order to move the vehicle back.

The width of the vehicle 10‴ is in principle determined by the width of the manure slide 21-1, 21-2. This width is adjustable because the cylinders 35 can adjust the angle which the manure slide side sections 21-1 make with the central manure slide section 21-2. The cylinders are, for example, hydraulic, pneumatic or electrohydraulic cylinders. Alternatively, electrical spindles etcetera are possible as actuators. Furthermore, it is also possible to configure the manure slide side sections 21-1 to be telescopic instead of pivotable. In that case one side section 21-1 will already be sufficient.

The cover 11' illustrated by dashed line again serves as a plateau which can be walked on for the livestock animals. In this case, the cover/the plateau 11' may be opted to be width-adjustable, with plateau side sections and similar parts as for the manure slide. Alternatively, it is possible for the plateau/the cover 11' to be a fixed part, i.e. with a fixed width. For example, this is sufficient if the variation in width of the manure slide is so small that the risk of livestock animals walking past the vehicle is very small. If every side section 21-1 can for example be moved sideways by only 25 cm at most, the risk of the animals not stepping onto the plateau 11' is very small.

The illustrated embodiments only serve to explain the invention and do not limit the latter. The scope of protection is defined by the attached claims.

## Claims

1. Shed-cleaning vehicle (10) for removing manure from a shed floor in an animal shed (1) for livestock animals (100), in particular dairy animals, comprising:
- a frame (18) with drive means (19) for moving the vehicle across the shed floor,
- a control unit (31) for the drive means to make the vehicle move autonomously in an intended direction of travel,
- a manure slide (21) for moving manure (22) across the shed floor, and
- a plateau which is configured such that it can be walked on by one or more of the livestock animals,
wherein the plateau extends over the vehicle over an upper side thereof, with a central plateau section (11) and in each case a treadboard section (13) on at least two sides of the central plateau section which is situated on an outer edge of the plateau at most at a predetermined step height connected to the type of livestock animal,
wherein the shed-cleaning vehicle with the drive means is configured for moving the vehicle together with the one or more livestock animals on the plateau.

2. Shed-cleaning vehicle according to Claim 1, wherein the central section is higher than at least one, and in particular each, treadboard section.

3. Shed-cleaning vehicle according to Claim 2, wherein the treadboard sections are situated on opposite sides, and, in particular, one treadboard section is situated on a front side of the vehicle, viewed in the intended direction of travel.

4. Shed-cleaning vehicle according to one of the preceding claims, wherein the treadboard sections are situated entirely around the central plateau section or animal-guiding means are situated on either side of the central plateau section which extend from a first one of the treadboard sections to a second one of the treadboard sections.

5. Shed-cleaning vehicle according to one of the preceding claims, wherein the treadboard section on the front side extends beyond a front section of manure slide.

6. Shed-cleaning vehicle according to one of the preceding claims, wherein at least one, and in particular each, treadboard section on the outer edge extends substantially to floor level.

7. Shed-cleaning device according to one of the preceding claims, wherein the step height is adjustable.

8. Shed-cleaning vehicle according to one of the preceding claims, wherein a width of the shed-cleaning vehicle, in particular of the manure slide and the plateau, more particularly of the manure slide and at least one treadboard section and/or the central part, is adjustable.

9. Shed-cleaning vehicle according to one of the preceding claims, wherein the drive means comprise two or more drivable wheels or an external pulling device or a motor with an engagement means for engaging with an external fixedly arranged construction, such as a toothing or chain.

10. Shed-cleaning vehicle according to claim 1, furthermore comprising a manure suction means (24, 25) for sucking up manure gathered by the manure slide and a manure storage container (26) which is connected thereto for collecting and temporarily storing the sucked-up manure.

11. Shed-cleaning vehicle according to one of the preceding claims, wherein the central section comprises an animal treatment device (12) for treating a claw or leg of the animal.

12. Shed-cleaning vehicle according to Claim 11, wherein the animal treatment device comprises a leg bath which is configured to contain, and in particular is provided with, a disinfectant (17) for the claws of the livestock animal.

13. Shed-cleaning vehicle according to Claim 11 or 12, wherein the animal treatment device comprises a spray nozzle (30) for spraying a cleaning agent or disinfectant onto a leg or claw of the livestock animal.

14. Animal shed (1) for livestock animals (100), in particular dairy animals, and comprising a shed-cleaning vehicle (10) according to one of Claims 1- 13, and a floor having a walkway (5) for the livestock animals, wherein the shed-cleaning vehicle in particular has a width equal to the walkway.

15. Animal shed according to Claim 14, wherein the floor is a closed floor, that is to say not a slatted floor, and furthermore a manure-collecting means (7) comprising a collecting trough recessed into the ground and at least one opening arranged in the ground above the collecting trough are provided, wherein, in particular, all this is provided in the animal shed.

## Patentansprüche

1. Stallreinigungsfahrzeug (10) zum Entfernen von Gülle von einem Stallboden in einem Tierstall (1) für Nutztiere (100), insbesondere Milchtiere, umfassend:
- einen Rahmen (18) mit Antriebsmitteln (19) zum Bewegen des Fahrzeugs über den Stallboden,
- eine Steuereinheit (31) für die Antriebsmittel, um zu bewirken, dass sich das Fahrzeug autonom in eine vorgesehene Fahrtrichtung bewegt,
- einen Gülleschieber (21) zum Bewegen von Gülle (22) über den Stallboden, und
- ein Plateau, das derart ausgestaltet ist, dass es von einem oder mehreren der Nutztiere betreten werden kann,
wobei sich das Plateau über das Fahrzeug über eine Oberseite davon mit einem mittleren Plateauabschnitt (11) und jeweils einem Trittbrettabschnitt (13) auf mindestens zwei Seiten des mittleren Plateauabschnitts erstreckt, der auf einer Außenkante des Plateaus höchstens auf einer vorbestimmten Stufenhöhe in Verbindung mit der Nutztierart angeordnet ist,
wobei das Stallreinigungsfahrzeug mit den Antriebsmitteln zum Bewegen des Fahrzeugs zusammen mit dem einen oder den mehreren Nutztieren auf dem Plateau ausgestaltet ist.

2. Stallreinigungsfahrzeug nach Anspruch 1, wobei der mittlere Abschnitt höher als mindestens ein, und insbesondere jeder, Trittbrettabschnitt ist.

3. Stallreinigungsfahrzeug nach Anspruch 2, wobei die Trittbrettabschnitte auf entgegengesetzten Seiten angeordnet sind, und wobei insbesondere ein Trittbrettabschnitt, in der vorgesehenen Fahrtrichtung gesehen, auf einer Vorderseite des Fahrzeugs angeordnet ist.

4. Stallreinigungsfahrzeug nach einem der vorhergehenden Ansprüche, wobei die Trittbrettabschnitte vollständig um den mittleren Plateauabschnitt herum angeordnet sind oder Tierführungsmittel auf jeder Seite des mittleren Plateauabschnitts angeordnet sind, die sich von einem ersten der Trittbrettabschnitte zu einem zweiten der Trittbrettabschnitte erstrecken.

5. Stallreinigungsfahrzeug nach einem der vorhergehenden Ansprüche, wobei sich der Trittbrettabschnitt auf der Vorderseite über einen vorderen Abschnitt des Gülleschiebers hinaus erstreckt.

6. Stallreinigungsfahrzeug nach einem der vorhergehenden Ansprüche, wobei sich mindestens ein, und insbesondere jeder, Trittbrettabschnitt auf der Außenkante im Wesentlichen zu einer Bodenebene erstreckt.

7. Stallreinigungsvorrichtung nach einem der vorhergehenden Ansprüche, wobei die Stufenhöhe einstellbar ist.

8. Stallreinigungsfahrzeug nach einem der vorhergehenden Ansprüche, wobei eine Breite des Stallreinigungsfahrzeugs, insbesondere des Gülleschiebers und des Plateaus, genauer gesagt des Gülleschiebers und mindestens eines Trittbrettabschnitts und/oder des mittleren Teils, einstellbar ist.

9. Stallreinigungsfahrzeug nach einem der vorhergehenden Ansprüche, wobei die Antriebsmittel zwei oder mehr antreibbare Räder oder eine externe Zugvorrichtung oder einen Motor mit einem Eingriffsmittel zum Eingreifen in eine externe fest angeordnete Konstruktion, wie etwa eine Verzahnung oder Kette, umfassen.

10. Stallreinigungsfahrzeug nach Anspruch 1, ferner umfassend ein Güllesaugmittel (24, 25) zum Aufsaugen von durch den Gülleschieber erfasster Gülle und einen Güllespeicherbehälter (26), der zum Sammeln und vorübergehenden Speichern der aufgesaugten Gülle damit verbunden ist.

11. Stallreinigungsfahrzeug nach einem der vorhergehenden Ansprüche, wobei der mittlere Abschnitt eine Tierbehandlungsvorrichtung (12) zum Behandeln einer Klaue oder eines Beins des Tiers umfasst.

12. Stallreinigungsfahrzeug nach Anspruch 11, wobei die Tierbehandlungsvorrichtung ein Beinbad umfasst, das dazu ausgestaltet ist, ein Desinfektionsmittel (17) für die Klauen des Nutztiers zu enthalten, und das insbesondere damit versehen ist.

13. Stallreinigungsfahrzeug nach Anspruch 11 oder 12, wobei die Tierbehandlungsvorrichtung eine Sprühdüse (30) zum Sprühen eines Reinigungsmittels oder Desinfektionsmittels auf ein Bein oder eine Klaue des Nutztiers umfasst.

14. Tierstall (1) für Nutztiere (100), insbesondere Milchtiere, und umfassend ein Stallreinigungsfahrzeug (10) nach einem der Ansprüche 1-13 und einen Boden mit einem Laufgang (5) für die Nutztiere, wobei das Stallreinigungsfahrzeug insbesondere eine gleiche Breite wie der Laufgang aufweist.

15. Tierstall nach Anspruch 14, wobei der Boden ein geschlossener Boden, das heißt kein Gitterboden, ist, und wobei ferner ein Güllesammelmittel (7), das eine in den Untergrund eingelassene Auffangwanne und mindestens eine in dem Untergrund über der Auffangwanne angeordnete Öffnung umfasst, bereitgestellt ist, wobei insbesondere all dies in dem Tierstall bereitgestellt ist.

## Revendications

1. Véhicule de nettoyage de hangar (10) destiné à enlever du fumier d'un plancher de hangar dans un hangar à animaux (1) pour des animaux de bétail (100), en particulier des animaux laitiers, comprenant :
- un cadre (18) avec des moyens d'entraînement (19) destinés à mouvoir le véhicule à travers le plancher de hangar,
- une unité de commande (31) pour les moyens d'entraînement pour amener le véhicule à se mouvoir de façon autonome dans une direction voulue de déplacement,
- une lame glissante à fumier (21) destinée à mouvoir du fumier (22) à travers le plancher de hangar, et
- une plate-forme qui est configurée de manière telle qu'un ou plusieurs des animaux de bétail peuvent marcher dessus,
dans lequel la plate-forme s'étend par-dessus le véhicule par-dessus un côté supérieur de celui-ci, avec une section de plate-forme centrale (11) et, dans chaque cas, une section de panneau de marche (13) sur au moins deux côtés de la section de plate-forme centrale qui est située sur un bord extérieur de la plate-forme, au plus à une hauteur de pas prédéterminée associée au type d'animal de bétail,
dans lequel le véhicule de nettoyage de hangar, avec les moyens d'entraînement, est configuré pour mouvoir le véhicule conjointement avec l'un ou les plusieurs animaux de bétail sur la plate-forme.

2. Véhicule de nettoyage de hangar selon la revendication 1, dans lequel la section centrale est plus haute qu'au moins une, et en particulier chaque, section de panneau de marche.

3. Véhicule de nettoyage de hangar selon la revendication 2, dans lequel les sections de panneau de marche sont situées sur des côtés opposés, et, en particulier, une section de panneau de marche est située sur un côté avant du véhicule, en vue dans la direction prévue de déplacement.

4. Véhicule de nettoyage de hangar selon l'une des revendications précédentes, dans lequel les sections de panneau de marche sont situées entièrement autour de la section de plate-forme centrale ou des moyens de guidage d'animal sont situés de chaque côté de la section de plate-forme centrale qui s'étendent depuis une première des sections de panneau de marche jusqu'à une seconde des sections de panneau de marche.

5. Véhicule de nettoyage de hangar selon l'une des revendications précédentes, dans lequel la section de panneau de marche sur le côté avant s'étend au-delà d'une section avant de lame glissante à fumier.

6. Véhicule de nettoyage de hangar selon l'une des revendications précédentes, dans lequel au moins une, et en particulier chaque, section de panneau de marche sur le bord extérieur s'étend sensiblement jusqu'au niveau du plancher.

7. Dispositif de nettoyage de hangar selon l'une des revendications précédentes, dans lequel la hauteur de pas est ajustable.

8. Véhicule de nettoyage de hangar selon l'une des revendications précédentes, dans lequel une largeur du véhicule de nettoyage de hangar, en particulier de la lame glissante à fumier et de la plate-forme, plus particulièrement de la lame glissante à fumier et d'au moins une section de panneau de marche et/ou de la partie centrale, est ajustable.

9. Véhicule de nettoyage de hangar selon l'une des revendications précédentes, dans lequel les moyens d'entraînement comprennent deux, ou plus, roues entraînables ou un dispositif de traction externe ou un moteur avec un moyen d'entrée en prise destiné à entrer en prise avec une construction externe agencée de façon fixe, telle qu'une denture ou chaîne.

10. Véhicule de nettoyage de hangar selon la revendication 1, comprenant en outre un moyen d'aspiration de fumier (24, 25) destiné à aspirer du fumier amassé par la lame glissante à fumier et un contenant de stockage de fumier (26), qui est raccordé à celui-ci, destiné à accumuler et stocker temporairement le fumier aspiré.

11. Véhicule de nettoyage de hangar selon l'une des revendications précédentes, dans lequel la section centrale comprend un dispositif de traitement d'animal (12) destiné à traiter une pince ou patte de l'animal.

12. Véhicule de nettoyage de hangar selon la revendication 11, dans lequel le dispositif de traitement d'animal comprend un bain pour patte qui est configuré pour contenir un désinfectant (17), et en particulier est alimenté en celui-ci, pour les pinces de l'animal de bétail.

13. Véhicule de nettoyage de hangar selon la revendication 11 ou 12, dans lequel le dispositif de traitement d'animal comprend une buse de pulvérisation (30) destinée à pulvériser un agent de nettoyage ou un désinfectant sur une patte ou pince de l'animal de bétail.

14. Hangar à animaux (1) pour des animaux de bétail (100), en particulier des animaux laitiers, et comprenant un véhicule de nettoyage de hangar (10) selon l'une des revendications 1 à 13, et un plancher comportant une allée (5) pour les animaux de bétail, dans lequel le véhicule de nettoyage de hangar présente en particulier une largeur égale à l'allée.

15. Hangar à animaux selon la revendication 14, dans lequel le plancher est un plancher fermé, autrement dit n'est pas un plancher à lattes, et en outre un moyen d'accumulation de fumier (7) comprenant un creux d'accumulation évidé dans le sol et au moins une ouverture agencée dans le sol au-dessus du creux d'accumulation sont prévus, dans lequel, en particulier, tout ceci est prévu dans le hangar à animaux.
